# FASCICULE DE BREVET EUROPEEN

(11) **EP 4 426 546 B1**
(45) Date de publication et mention de la délivrance du brevet: **16.07.2025**
(21) Numéro de dépôt: 22813644.6
(22) Date de dépôt: 20.10.2022
(51) Int. Cl.: B29C 70/54, B29L 31/00, B29B 11/16

(54) **PROCEDE DE FABRICATION DE CALES D'AUBES COMPOSITES POUR UNE TURBOMACHINE D'AERONEF**
VERFAHREN ZUR HERSTELLUNG VON VERBUNDSCHAUFELSTOLLEN FÜR EIN FLUGZEUGTURBINENTRIEBWERK
METHOD FOR PRODUCING COMPOSITE BLADE CLEATS FOR AN AIRCRAFT TURBINE ENGINE

(30) Priorité: 03.11.2021 FR 2111649
(43) Date de publication de la demande: 11.09.2024
(73) Titulaire: SAFRAN, 75015 Paris (FR)
(72) Inventeur: MARCHAL, Yann Didier Simon, 77550 Moissy-Cramayel (FR); COUPE, Dominique Marie Christian, 77550 Moissy-Cramayel (FR); LE CLOAREC, Damien Vincent, 77550 Moissy-Cramayel (FR)
(74) Mandataire: Cabinet Beau de Loménie
(86) Numéro de dépôt international: PCT/FR2022/051988
(87) Numéro de publication internationale: WO 2023/079224

(56) Documents cités:
- DE-A1- 102014 213 294
- FR-A1- 2 718 802
- FR-A1- 2 939 130
- US-A1- 2002 197 448

## Description

### Domaine technique

Le présent exposé concerne le domaine de l'aéronautique, et notamment le domaine des pièces composites utilisées dans les turbomachines d'aéronef. En particulier, le présent exposé est relatif à un procédé de fabrication de cales d'aubes composites pour une turbomachine d'aéronef.

### Technique antérieure

Dans une turbomachine d'aéronef, certaines aubes, typiquement les aubes mobiles, sont assemblées sur la périphérie d'un disque central par insertion des pieds d'aube dans des alvéoles du disque prévues à cet effet. Une cale est agencée entre le pied d'aube et l'alvéole correspondante afin de bien maintenir l'aube engagée dans le disque.

Les cales d'aubes, qui peuvent être en matériau composite, peuvent être réalisées par découpe d'une préforme de cale et injection d'une matrice sur cette préforme. Afin d'assurer la qualité de la cale, la préforme n'est pas préparée aux dimensions exactes de la cale, mais plus grande, afin de pouvoir, après injection, en retirer le pourtour qui présente généralement des effets de bord indésirables. Néanmoins, les pertes de matière associées à un tel procédé sont significatives, si bien qu'il existe un besoin pour un nouveau type de procédé de fabrication de cales d'aubes composites pour une turbomachine d'aéronef, permettant de réduire ces pertes sans affecter négativement la qualité des cales produites.
Par ailleurs, FR 2 718 802 divulgue un procédé de fabrication d'une bielle composite, DE 10 2014 213294 divulgue un procédé de fabrication de pièces moulées pour prothèses en matière plastique renforcée par des fibres, et US 2002/197448 divulgue un procédé de fabrication d'éléments de friction composites.

### Exposé de l'invention

A cet effet, le présent exposé concerne un procédé de fabrication de cales d'aubes composites pour une turbomachine d'aéronef selon la revendication 1.

Dans le présent procédé, les cales d'aubes sont en matériau composite, indépendamment du matériau des aubes elles-mêmes.

La préforme de cale est une partie du panneau tissé. Après injection de la matrice, cette préforme de cale (ou plus simplement « préforme »), associée à la matrice, forme une cale. La marge de la préforme de cale se retrouve dans un premier temps sur la cale elle-même (on parle alors de la marge de la cale), avant d'être retirée lors de la division du panneau et/ou par usinage.

Le panneau peut comprendre des fibres qui sont tissées entre elles de manière à assurer la tenue mécanique de la cale. Le panneau peut être d'un seul tenant.

Chaque préforme de cale a une partie utile, qui est la partie destinée à former la cale une fois terminée, et au moins une marge, la ou les marges étant des parties servant à la fabrication mais qui ne sont pas présentes dans la cale finale. Par la suite, et sauf indication contraire, par « une » ou « la » marge, on entend « au moins une » ou « la au moins une » ou encore « chaque » marge. Réciproquement, l'emploi générique du pluriel peut inclure le singulier.

La matrice, par exemple une matrice organique, peut être injectée sur le panneau de façon à venir noyer au moins en partie les fibres des préformes de cales. L'injection de la matrice peut être réalisée par tout moyen connu de l'homme du métier. Les fibres peuvent être pré-imprégnées ou non.

Après injection de la matrice, et optionnellement après solidification de la matrice, les cales sont séparées les unes des autres. La séparation peut se faire, par exemple, au niveau des marges.

Lors de l'usinage, les marges qui restent sont retirées de chaque cale, étant entendu qu'une partie des marges aura déjà pu être retirée lors de l'étape de division du panneau. L'usinage peut être réalisé avant, après et/ou pendant la division du panneau.

Grâce au fait que les préformes sont réparties dans le panneau de sorte que deux préformes adjacentes ont au moins une partie de marge en commun, les marges sont au moins partiellement mutualisées : une même partie de marge peut servir pour deux préformes adjacentes. Ainsi, au lieu de deux marges qui se cumulent, le panneau comprend une marge (au moins en partie) commune. La part de matière, fibres et matrice, qui est ensuite retirée, est donc diminuée. Il s'ensuit non seulement une économie de matériaux - potentiellement de l'ordre de 50% - mais aussi une économie sur l'utilisation des métiers à tisser, car la quantité de marges à tisser par préforme de cale est moindre que selon les méthodes précédemment employées. Le procédé est donc plus rapide et moins coûteux. En outre, les marges se trouvant entre deux préformes ne présentent pas d'effet de bord, si bien qu'elles peuvent être de dimensions moindres que des marges présentant des effets de bord. Enfin, comme la partie retirée à l'usinage est réduite, les contraintes mécaniques associées à cette partie sont également réduites, et les relâchements de contraintes qui apparaissent dans la cale au moment de l'usinage sont donc diminués. Les cales ont donc une meilleure stabilité géométrique.

Conceptuellement, une marge en commun entre deux préformes pourrait être vue comme la juxtaposition de deux demi-marges, chaque préforme ayant sa propre demi-marge qui n'est pas partagée avec la préforme adjacente. Au sens du présent exposé, le fait que deux préformes adjacentes aient au moins une partie de marge en commun signifie au contraire que chaque préforme bénéficie non seulement de sa propre demi-marge (ou plus généralement sa propre fraction de marge) mais également, au moins en partie, de la demi-marge (ou plus généralement fraction de marge complémentaire) de la préforme adjacente. En d'autres termes, si la demi-marge de la préforme adjacente était retirée, le procédé de fabrication serait moins performant. Ainsi, une marge au moins en partie en commune au sens du présent exposé doit bien être considérée comme une marge unique mais partagée, et non une juxtaposition de demi-marges indépendantes.

Dans certains modes de réalisation, les préformes de cales sont tissées continument les unes avec les autres. Ainsi, certaines fibres s'étendent continument d'une préforme de cale à une autre préforme de cale, voire, optionnellement, entre les parties utiles respectives desdites préformes de cales. Optionnellement, certaines fibres s'étendent continument d'une préforme de cale à une autre préforme de cale via la marge au moins en partie commune entre ces deux préformes. Cela permet de faciliter le tissage mais aussi de diminuer les marges nécessaires entre deux préformes adjacentes, les effets de bord étant moins présents que lorsque les préformes sont tissées indépendamment les unes des autres.

Dans certains modes de réalisation, le panneau comprend une unique rangée de préformes de cales. Cela offre plus de liberté pour la disposition et l'orientation des préformes de cales dans le panneau. En outre, cela permet d'éviter la complexité associée à un panneau ayant plusieurs rangées de préformes de cales et à une déformation qui en résulte en raison de la géométrie potentiellement complexes des cales.

Après l'injection, les cales ont une section courbe, la courbure d'une cale donnée étant inversée par rapport à la courbure d'une cale adjacente. La courbure d'une cale désigne la courbure d'une section de la cale. Ces dispositions permettent une bonne continuité des fibres entre deux cales adjacentes, et évite, à l'interface entre les préformes de cales, les plis et points de rebroussement qui seraient susceptibles d'affecter la santé matière. Plus généralement, la courbure des cales peut être inversée d'une cale à l'autre.

Dans certains modes de réalisation, le panneau présente, au moins pendant l'injection, une forme ondulée dans la direction d'alignement des préformes de cales. Les préformes de cales étant juxtaposées, la direction d'alignement des préformes de cales est la direction de la rangée formée par les préformes de cales successives. La forme ondulée peut être formée par la succession de courbures inversées précédemment décrite. La forme ondulée permet de conserver un panneau facile à manipuler et compatible avec les moules d'injection usuels.

Bien que le présent exposé considère l'exemple d'un alignement rectiligne des préformes de cales, la direction d'alignement peut également être courbe, par exemple si les préformes sont agencées en cercle.

Dans certains modes de réalisation, la partie utile comprend un corps et une tête amincie faisant saillie longitudinalement du corps. La direction longitudinale du corps peut être la direction dans laquelle le corps a la plus grande dimension. La tête peut être amincie par rapport au corps transversalement à la direction longitudinale.

Dans certains modes de réalisation, les deux préformes adjacentes sont adjacentes l'une à l'autre dans une première direction et les têtes des deux préformes adjacentes sont situées chacune d'un côté différent de la première direction. La première direction peut être la direction d'alignement.

La direction d'alignement peut être transversale à la direction longitudinale du corps, ce qui permet de mutualiser les marges les plus longues (par définition de la direction longitudinale) entre les préformes successives, et donc de maximiser le gain de matière.

Grâce au fait que les têtes des deux préformes adjacentes sont situées chacune d'un côté différent de la première direction, les deux préformes adjacentes sont disposées dans le panneau de façon que leurs bords en vis-à-vis présentent une certaine complémentarité de forme bidimensionnelle, voire tridimensionnelle. De ce fait, les marges peuvent être encore réduites et les gains précédemment détaillés sont accrus.

Au sens du présent exposé et sauf indication contraire, la mention d'un « premier » élément, tel qu'une première direction, n'implique pas nécessairement l'existence d'un « deuxième » élément ni, le cas échéant, de relation d'ordre entre le premier et le deuxième élément. Les qualificatifs ordinaux sont, dans ce contexte, employés à des seules fins de clarté et d'identification, sans préjuger de caractéristiques particulières.

Dans certains modes de réalisation, les deux préformes adjacentes sont adjacentes l'une à l'autre dans une deuxième direction et les têtes des deux préformes adjacentes sont situées à des extrémités opposées dans la deuxième direction. La deuxième direction peut être la direction longitudinale. Dans ces modes de réalisation, les préformes de cales peuvent être en regard l'une de l'autre par leur côté opposé à la tête, et avoir des têtes respectives qui font saillie à l'opposé l'une de l'autre. En juxtaposant de telles paires de préformes transversalement à la deuxième direction, il est possible de former deux rangées de préformes et de traiter davantage de préformes de cales en une seule étape d'injection de matrice. La rapidité de la fabrication est donc augmentée.

Dans certains modes de réalisation, la fourniture du panneau comprend le tissage d'un canevas et la découpe d'au moins un panneau dans le canevas. Le canevas est un objet tissé d'un seul tenant. Le canevas peut comprendre plusieurs panneaux. Chaque panneau, correspondant à un lot de préformes de cales, peut ensuite faire l'objet d'une étape d'injection de matrice séparée.

Dans certains modes de réalisation, le panneau est tissé par tissage tridimensionnel. On entend par « tissage tridimensionnel » une technique de tissage dans laquelle des fils de trame circulent au sein d'une matrice de fils de chaîne de manière à former un réseau tridimensionnel de fils selon une armure tridimensionnelle : toutes les couches de fils d'une telle structure fibreuse sont alors tissées au cours d'une même étape de tissage au sein d'un métier à tisser tridimensionnel. Le tissage tridimensionnel est plus particulièrement décrit dans la demande internationale WO 2006/136755 A2 de la Demanderesse. Les fils peuvent être formés par les fibres précitées.

Dans certains modes de réalisation, le panneau comprend des fils de diamètres différents. Des fils de diamètres différents permettent de créer des variations d'épaisseur de la préforme de cale, et donc de la cale résultante, tout en limitant ou en évitant les variations de taux de fibres à l'intérieur de la cale.

### Brève description des dessins

D'autres caractéristiques et avantages de l'objet du présent exposé ressortiront de la description suivante de modes de réalisation, donnés à titre d'exemples non limitatifs, en référence aux figures annexées. L'invention est définie par l'objet des revendications 1 à 10.
[Fig. 1] La figure 1 est un schéma illustrant les étapes d'un procédé de fabrication selon un mode de réalisation.
[Fig. 2] La figure 2 représente un panneau en vue de dessus, selon un mode de réalisation.
[Fig. 3] La figure 3 représente une préforme de cale en vue de dessus, selon un mode de réalisation.
[Fig. 4] La figure 4 est une vue en perspective d'un panneau après injection de matrice, selon un mode de réalisation.
[Fig. 5] La figure 5 illustre schématiquement l'injection de résine sur un panneau selon un autre mode de réalisation.

### Description détaillée

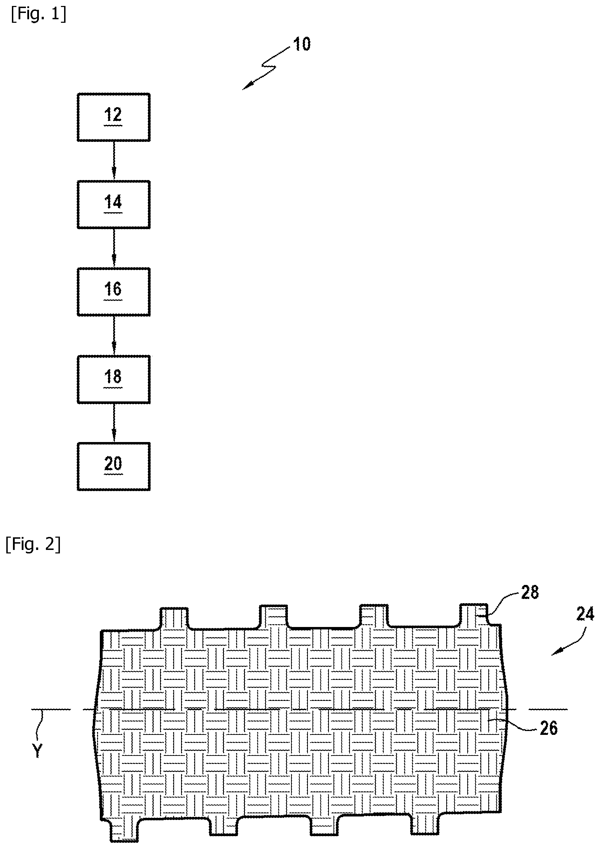

Un procédé de fabrication de cales d'aubes composites pour une turbomachine d'aéronef est décrit en référence aux figures 1 à 5. Comme indiqué précédemment, la cale composite peut être intercalée entre une aube, par exemple une aube de soufflante, et une alvéole dans laquelle cette aube est montée.

La figure 1 illustre schématiquement les étapes d'un procédé de fabrication 10. Le procédé de fabrication 10 comprend la fourniture d'un panneau, tissé, comprenant une pluralité de préformes de cales. En l'espèce, la fourniture du panneau comprend le tissage d'un canevas (étape 12) et la découpe d'au moins un panneau dans ledit canevas (étape 14). Le panneau, voire le canevas dont le panneau hérite des propriétés, peut être tissé par tissage tridimensionnel de fibres. Les fibres peuvent être des fibres organiques, par exemple des fibres de carbone.

Un panneau 24 est schématiquement illustré, en vue de dessus, sur la figure 2. Comme il ressort de cette figure, le panneau 24 est d'un seul tenant. Le panneau 24 peut présenter une forme correspondant globalement à une juxtaposition de préformes de cales. En l'espèce, le panneau 24 comprend une zone centrale 26 destinée à former les corps des cales, et des excroissances 28 destinées à former les têtes de cales, qui seront décrites ci-après. Les excroissances 28 font saillie de la zone centrale 26 en alternance de part et d'autre de la zone centrale 26.

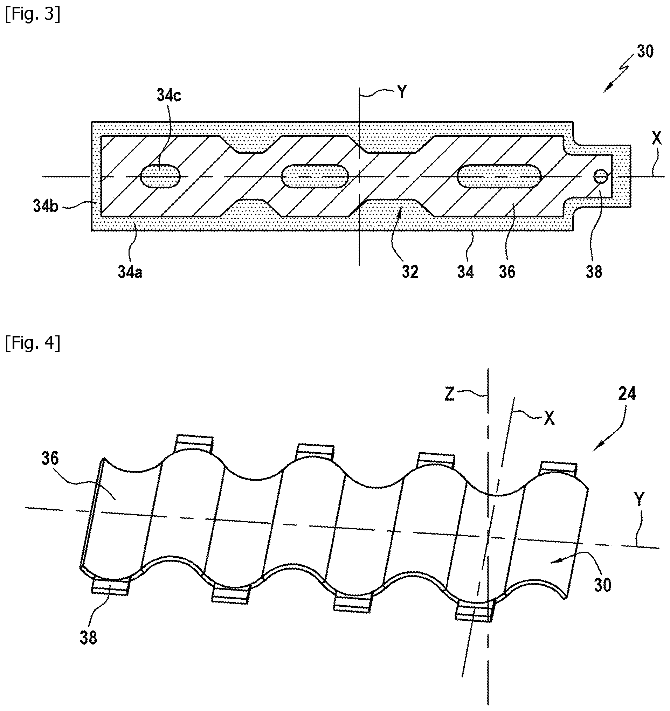

La figure 3 illustre plus particulièrement une préforme de cale 30 (aussi appelée préforme 30 par souci de concision). La préforme 30 s'étend globalement selon une direction longitudinale X.

Comme indiqué précédemment, la préforme 30 comprend une partie utile 32, hachurée sur la figure 3, et au moins une marge 34. En l'espèce, la partie utile 32 est entourée de marges. L'au moins une marge 34 peut comprendre deux marges longitudinales 34a s'étendant dans la direction longitudinale X, et/ou deux marges transversales 34b s'étendant dans la direction transversale Y.

La préforme 30 peut également comprendre une ou plusieurs marges internes 34c, correspondant à des parties qui seront ajourées dans la cale finale.

Comme il ressort des figures 2 et 3, les préformes de cales 30 peuvent être tissées continument les unes avec les autres. Ainsi, au moins certaines fibres s'étendent continument d'une préforme 30 à l'autre, ce qui permet de tisser le panneau 24 facilement d'un seul tenant, sans discontinuité de fibres entre les préformes 30 successives. D'ailleurs, la figure 2 illustre schématiquement que dans le panneau 24 lui-même, la frontière entre deux préformes 30 n'est pas perceptible, même s'il serait possible de délimiter virtuellement les préformes 30. Dans d'autres modes de réalisation, la limite entre deux préformes 30 adjacentes peut être visuellement perceptible, notamment dans le cas où le motif de tissage change à l'interface entre deux préformes, et/ou du fait de la présence de longueurs excédentaires de fibres au niveau des marges.

Comme évoqué précédemment, la partie utile 32 de la préforme 30 comprend un corps 36 et une tête 38. La tête 38 est amincie par rapport au corps 36 et fait saillie longitudinalement du corps 36. On constate en effet, sur la figure 3, que la tête 38 est moins large que le corps 36 dans la direction transversale Y. La marge transversale 34b au niveau de la tête 38 peut suivre la forme de la tête 38.

Comme indiqué précédemment, les préformes 30 sont réparties dans le panneau 24 de sorte que deux préformes 30 adjacentes ont au moins une partie de marge en commun. En l'espèce, les préformes adjacentes 30 peuvent être disposées dans le panneau 24 de façon à partager au moins en partie une même marge longitudinale 34a. Ainsi, comme illustré sur la figure 2, les préformes 30 peuvent être disposées côte à côte, ce qui est visible par le fait que les excroissances 28, destinées à former les têtes 38, se succèdent selon la direction transversale Y. Dans ce mode de réalisation, le panneau 24 comprend donc une unique rangée de préformes de cales 30.

Dans cet exemple, les préformes 30 sont adjacentes les unes aux autres dans une première direction, à savoir la direction transversale Y, et les têtes 38 des préformes 30 adjacentes sont situées chacune d'un côté différent de la première direction, à savoir la direction transversale Y. Typiquement, au vu de l'orientation de la figure 3, la première excroissance 28 en partant de la gauche est située en-dessous de la direction transversale Y (c'est-à-dire aussi d'un premier côté de la zone centrale 26), tandis que l'excroissance 28 suivante, en allant vers la droite, est située au-dessus de la direction transversale Y (c'est-à-dire aussi d'un côté opposé de la zone centrale 26), et ainsi de suite.

Le panneau 24 peut être fourni plat, comme illustré sur la figure 2. Si nécessaire, le panneau 24 peut subir un formage et/ou un compactage afin de le préparer à l'injection d'une matrice.

Une matrice est ensuite injectée sur le panneau 24 (étape 16 sur la figure 1), typiquement dans un moule dans lequel le panneau 24 est placé. La matrice peut comprendre une résine telle qu'une résine organique, par exemple une résine époxy, ou toute autre matrice convenant à l'utilisation visée.

Le cas échéant, le panneau injecté est ensuite démoulé, et si besoin, un ébavurage peut être réalisé.

La figure 4 illustre le résultat obtenu après injection de la matrice sur le panneau 24. Le panneau 24 présente une forme ondulée dans la direction d'alignement des préformes de cales, c'est-à-dire ici dans la direction transversale Y. Plus précisément, au fur et à mesure qu'on le parcourt dans la direction transversale Y (direction d'alignement), le panneau 24 présente des ondulations dont l'amplitude se mesure sur un axe Z transversal à la direction longitudinale X et à la direction transversale Y. Abstraction faite des ondulations, le panneau 24 peut être globalement plan, c'est-à-dire avoir une cote moyenne constante selon l'axe Z. A noter que les axes X, Y, Z sont ici deux à deux orthogonaux.

Cette forme peut être prévue dès l'étape 16 d'injection de matrice, par exemple grâce à l'étape de formage précitée, et/ou à une forme souhaitée du moule dans lequel l'injection peut être réalisée.

Après l'injection, comme le montre la figure 4, les cales ont une section courbe, la courbure d'une cale donnée étant inversée par rapport à la courbure d'une cale adjacente. Ainsi, sur la figure 4, la première cale en partant de la gauche apparaît concave vue du haut, tandis que la cale suivante vers la droite apparaît convexe vue du haut, et ainsi de suite.

Des variantes de positionnement des préformes de cales 30 au sein du panneau 24 sont possibles. Par exemple, les préformes 30 peuvent être agencées selon non pas une mais deux rangées dans la direction transversale Y. Dans ce cas, les rangées peuvent être disposées comme sur les figures 2 et 4, avec les excroissances 28 formant les têtes 38 disposées alternativement de part et d'autre de la zone centrale 26. A l'interface entre les deux rangées, les excroissances 28 de l'une des rangées peuvent occuper les places vides entre deux excroissances de l'autre rangée.

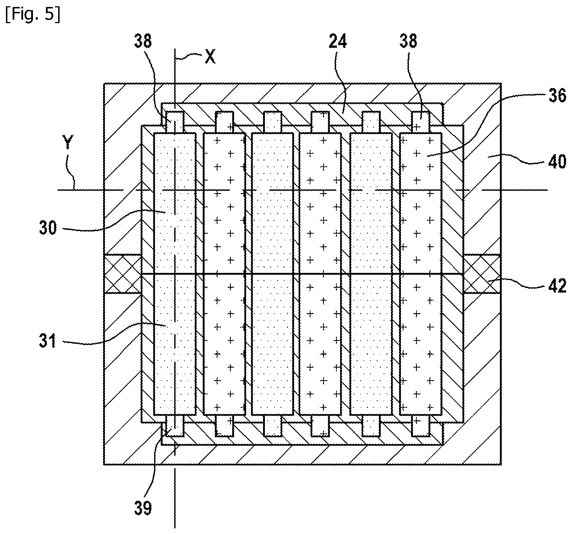

Une autre variante est schématisée sur la figure 5. Dans cette variante, les deux rangées sont telles que deux préformes 30, 31 adjacentes sont adjacentes l'une à l'autre dans une deuxième direction, à savoir la direction longitudinale X, et les têtes 38, 39 des deux préformes 30, 31 adjacentes sont situées à des extrémités opposées dans la deuxième direction, à savoir la direction longitudinale X. En d'autres termes, les deux préformes 30, 31 adjacentes sont adjacentes l'une à l'autre du côté de leur corps 36 (par opposition à leur tête) : chaque préforme 30, 31 présente, à l'interface avec l'autre préforme, son extrémité opposée à la tête.

Comme évoqué précédemment, de telles paires de préformes peuvent être juxtaposées, par exemple dans la direction transversale Y. Le cas échéant, l'alternance de courbures peut être conservée, comme en témoigne la figure 5 sur laquelle les points illustrent un côté concave de la préforme 30, tandis que les croix illustrent un côté convexe de la préforme 30.

Comme deux préformes adjacentes dans la direction transversale Y ont leur tête 38 du même côté, il peut être utile de prévoir une marge longitudinale entre deux préformes adjacentes plus large que dans le mode de réalisation de la figure 4, dans la mesure où la disposition de la figure 5 peut ne pas assurer une aussi bonne complémentarité de forme entre deux bords de préformes 30. On note néanmoins que la marge entre deux préformes adjacentes reste plus étroite que les marges nécessaires aux extrémités du panneau 24, à l'interface avec le moule 40 dans la direction transversale Y, ces marges externes étant dues aux effets de bord. Cela atteste du gain tout de même atteint avec ce type d'agencement, d'autant que ce mode de réalisation permet de réduire les chutes au niveau des têtes 38.

L'injection de matrice peut être réalisée via un canal d'alimentation 42 prévu dans le moule 40. Le moule 40 forme une cavité unique pour l'ensemble du panneau 24. Par cavité unique, on signifie que le moule 40 ne forme pas de séparation entre des préformes 30 adjacentes, dans la ou les direction(s) d'alignement des préformes 30.

En référence de nouveau à la figure 1, après l'étape d'injection 16, le procédé de fabrication 10 comprend la division du panneau 24 afin de séparer les cales les unes des autres. Par exemple, cette division peut se faire selon les traits intermédiaires illustrés sur la figure 4.

Une étape d'usinage 20 est prévue pour retirer les marges 34 des cales, étant entendu que l'élimination des marges 34 peut avoir partiellement lieu lors de la division du panneau 24. Le reste de l'usinage peut avoir lieu avant la division du panneau 24, par exemple pour dégager les têtes 38, ce qui permet de manipuler une pièce d'un seul tenant, et/ou après la division du panneau 24, par exemple pour usiner les zones qui se trouvent entre deux cales.

Optionnellement, des contrôles visuels et/ou instrumentés peuvent être réalisés à plusieurs instants du procédé de fabrication, et notamment après l'usinage.

Bien que la présente description se réfère à des exemples de réalisation spécifiques, des modifications peuvent être apportées à ces exemples sans sortir de la portée générale de l'invention telle que définie par les revendications.

## Revendications

1. Procédé de fabrication (10) de cales d'aubes composites pour une turbomachine d'aéronef, comprenant:
- la fourniture (12, 14) d'un panneau (24), tissé, comprenant une pluralité de préformes de cales (30) ayant chacune une partie utile (32) et au moins une marge (34), les préformes (30) étant réparties dans le panneau (24) de sorte que deux préformes (30) adjacentes ont au moins une partie de ladite marge (34) en commun ;
- l'injection (16) d'une matrice sur le panneau (24) ;
- après l'injection, la division (18) du panneau (24) afin de séparer les cales les unes des autres ;
- l'usinage (20) des cales pour retirer les marges (34) ;
**caractérisé en ce que**, après l'injection (16), les cales ont une section courbe, la courbure d'une cale donnée étant inversée par rapport à la courbure d'une cale adjacente.

2. Procédé de fabrication selon la revendication 1, dans lequel les préformes de cales (30) sont tissées continument les unes avec les autres.

3. Procédé de fabrication selon la revendication 1 ou 2, dans lequel le panneau (24) comprend une unique rangée de préformes de cales (30).

4. Procédé de fabrication selon l'une quelconque des revendications précédentes, dans lequel le panneau (24) présente, au moins pendant l'injection, une forme ondulée dans la direction d'alignement (Y) des préformes de cales (30).

5. Procédé de fabrication selon l'une quelconque des revendications précédentes, dans lequel la partie utile (32) comprend un corps (36) et une tête (38) amincie faisant saillie longitudinalement du corps (36).

6. Procédé de fabrication selon la revendication précédente, dans lequel les deux préformes (30) adjacentes sont adjacentes l'une à l'autre dans une première direction (Y) et les têtes (38) des deux préformes (30) adjacentes sont situées chacune d'un côté différent de la première direction (Y).

7. Procédé de fabrication selon la revendication 5, dans lequel les deux préformes (30, 31) adjacentes sont adjacentes l'une à l'autre dans une deuxième direction (X) et les têtes (38) des deux préformes (30, 31) adjacentes sont situées à des extrémités opposées dans la deuxième direction (X).

8. Procédé de fabrication selon l'une quelconque des revendications précédentes, dans lequel la fourniture du panneau (24) comprend le tissage (12) d'un canevas et la découpe (14) d'au moins un panneau (24) dans le canevas.

9. Procédé de fabrication selon l'une quelconque des revendications précédentes, dans lequel le panneau (24) est tissé par tissage tridimensionnel.

10. Procédé de fabrication selon l'une quelconque des revendications précédentes, dans lequel le panneau (24) comprend des fils de diamètres différents.

## Patentansprüche

1. Herstellungsverfahren (10) von Verbundschaufelkeilen für eine Flugzeugturbomaschine, umfassend:
- Bereitstellen (12, 14) einer gewebten Platte (24), umfassend eine Vielzahl von Keilvorformlingen (30), die jeweils einen Nutzabschnitt (32) und mindestens einen Rand (34) aufweisen, wobei die Vorformlinge (30) in der Platte (24) verteilt sind, sodass zwei angrenzende Vorformlinge (30) zumindest einen Teil des Rands (34) gemein haben;
- Einspritzen (16) einer Matrix auf die Platte (24);
- nach Einspritzen, Teilen (18) der Platte (24), um die Keile voneinander zu trennen;
- Bearbeiten (20) der Keile, um die Ränder (34) zu entfernen;
**dadurch gekennzeichnet, dass** die Keile nach Einspritzen (16) einen gekrümmten Querschnitt aufweisen, wobei die Krümmung eines bestimmten Keils in Bezug auf die Krümmung eines angrenzenden Keils umgekehrt ist.

2. Herstellungsverfahren nach Anspruch 1, wobei die Keilvorformlinge (30) kontinuierlich miteinander verwoben sind.

3. Herstellungsverfahren nach Anspruch 1 oder 2, wobei die Platte (24) eine einzelne Reihe von Keilvorformlingen (30) umfasst.

4. Herstellungsverfahren nach einem der vorherigen Ansprüche, wobei die Platte (24) zumindest während des Einspritzens eine Wellenform in der Ausrichtungsrichtung (Y) der Keilvorformlinge (30) aufweist.

5. Herstellungsverfahren nach einem der vorherigen Ansprüche, wobei der Nutzabschnitt (32) einen Körper (36) und einen verdünnten Kopf (38) umfasst, der in Längsrichtung von dem Körper (36) hervorsteht.

6. Herstellungsverfahren nach dem vorherigen Anspruch, wobei die zwei angrenzenden Vorformlinge (30) in einer ersten Richtung (Y) aneinander angrenzen und die Köpfe (38) der zwei angrenzenden Vorformlinge (30) jeweils auf einer anderen Seite der ersten Richtung (Y) angeordnet sind.

7. Herstellungsverfahren nach Anspruch 5, wobei die beiden angrenzenden Vorformlinge (30, 31) in einer zweiten Richtung (X) aneinander angrenzen und die Köpfe (38) der zwei angrenzenden Vorformlinge (30, 31) an gegenüberliegenden Enden in der zweiten Richtung (X) angeordnet sind.

8. Herstellungsverfahren nach einem der vorherigen Ansprüche, wobei das Bereitstellen der Platte (24) das Weben (12) eines Kanevas und das Schneiden (14) von mindestens einer Platte (24) aus dem Kanevas umfasst.

9. Herstellungsverfahren nach einem der vorherigen Ansprüche, wobei die Platte (24) durch dreidimensionales Weben gewebt wird.

10. Herstellungsverfahren nach einem der vorherigen Ansprüche, wobei die Platte (24) Fäden unterschiedlichen Durchmessers umfasst.

## Claims

1. A method (10) for manufacturing composite blade cleats for an aircraft turbine engine, comprising:
- providing (12, 14) a panel (24), the panel being woven and comprising a plurality of cleat preforms (30) each having a usable portion (32) and at least one margin (34), the preforms (30) being distributed in the panel (24) so that two adjacent preforms (30) have at least one portion of said margin (34) in common;
- injecting (16) a matrix onto the panel (24) ;
- after injection, dividing (18) the panel (24) in order to separate the cleats from one another;
- machining (20) the cleats to remove the margins (34);
**characterized in that**, after the injecting (16), the cleats have a curved cross section, the curvature of a given cleat being reversed relative to the curvature of an adjacent cleat.

2. The manufacturing method according to claim 1, wherein the cleat preforms (30) are continuously woven with one another.

3. The manufacturing method according to claim 1 or 2, wherein the panel (24) comprises a single row of cleat preforms (30).

4. The manufacturing method according to any one of the preceding claims, wherein the panel (24) has, at least during injection, a shape that is corrugated in the alignment direction (Y) of the cleat preforms (30).

5. The manufacturing method according to any one of the preceding claims, wherein the usable portion (32) comprises a body (36) and a narrowed head (38) protruding longitudinally from the body (36).

6. The manufacturing method according to the preceding claim, wherein the two adjacent preforms (30) are adjacent to one another in a first direction (Y) and each of the heads (38) of the two adjacent preforms (30) is located on a different side of the first direction (Y).

7. The manufacturing method according to claim 5, wherein the two adjacent preforms (30, 31) are adjacent to one another in a second direction (X) and the heads (38) of the two adjacent preforms (30, 31) are located at opposite ends in the second direction (X).

8. The manufacturing method according to any one of the preceding claims, wherein the providing the panel (24) comprises weaving (12) a scrim and cutting (14) at least one panel (24) in the scrim.

9. The manufacturing method according to any one of the preceding claims, wherein the panel (24) is woven by three-dimensional weaving.

10. The manufacturing method according to any one of the preceding claims, wherein the panel (24) comprises yarns of different diameters.
